# FASCICULE DE BREVET EUROPEEN

(11) **EP 1 118 559 B1**
(45) Date de publication et mention de la délivrance du brevet: **14.09.2005**
(21) Numéro de dépôt: 01400146.5
(22) Date de dépôt: 19.01.2001
(51) Int. Cl.: B65G 21/06

(54) **Structure d'un ensemble autoporteur et autonome, notamment un transporteur à bande**
Struktur eines autonomen und selbsttragenden Bauelements, insbesondere ein Förderband
Structure of an autonomous and self-supporting assembly, in particular a belt conveyor

(30) Priorité: 21.01.2000 FR 0000803
(43) Date de publication de la demande: 25.07.2001
(73) Titulaire: Chronopost Société Anonyme, 92130 Issy Les Moulineaux (FR)
(72) Inventeur: Triole, Pascal Georges Christian, 92600 Asnières sur Seine (FR)
(74) Mandataire: L'Helgoualch, Jean

(56) Documents cités:
- EP-A- 0 301 609
- DE-A- 2 011 753
- DE-C- 754 815
- DE-C- 886 874
- FR-A- 2 269 468
- US-A- 4 650 067
- US-A- 4 982 835
- US-A- 5 178 263

## Description

Les structures métalliques telles que châssis de machines, passerelles, transporteurs et autres sont fabriquées à la demande, sur mesures, à l'exception de certaines qui correspondent à des modules mais qui sont de toutes façons incomplètes.

En d'autres termes, il ne s'agit pas d'ensembles autonomes formant un tout.

Dans le cas des transporteurs à bande, par exemple, la partie fixe est un châssis formé d'une tôle pliée pour présenter une partie centrale plane et deux rives verticales.

Ce châssis est posé sur des pieds plus ou moins nombreux selon sa longueur.

La motorisation de la bande est réalisée à partir de moteurs du commerce en prise avec une cinématique qui transmet le mouvement de rotation du moteur à un cylindre, avec une démultiplication plus ou moins grande et, éventuellement, un réducteur de vitesse réglable. Le châssis est livré nu, il est monté sur site : mise en place des pieds, dépose du châssis, fixation du moteur et de sa cinématique, câblage électrique qui suppose la réalisation, sur place, d'un chemin de câbles situé au sol sous le châssis, etc.

La réalisation du châssis au moyen de tôle pliée procure une rigidité très faible justifiant la présence de pieds nombreux et gênants, et qui en outre ne peuvent pas être très hauts en raison de l'instabilité structurelle du châssis.

La nature et l'emplacement des moteurs est très malcommode et provoquent des bruits et des vibrations dont le désagrément est amplifié par le fait que le châssis en tôle pliée forme une caisse de résonance.

Pour fixer l'État de la Technique, on peut citer les documents de brevet suivants :
US 4 650 067 décrit un mini-transporteur ayant une extrémité non libre, obturée par une rebord 74 et dont les rives sont constituées par des profilés en [ qui se font face, ce qui est exactement contraire à ce que prévoit l'invention.
DE 754 815 décrit une structure de convoyeur qui n'a pas de longueur finie et qui ne constitue pas un ensemble autoporteur et autonome puisque les longerons sont posés sur des supports, comme des rails sur des travers, c'est-à-dire, sur des distances indéfinies.

La présente invention s'écarte complètement de ces conceptions et permet de réaliser des structures autoportantes et autonomes, que l'on peut pratiquement assimiler à des appareils fabriqués en usine et livrés prêts au montage.

US-A-4 982 835 montre une structure telle que définie dans le préambule de la revendication 1.

A cette fin, l'invention a pour objet une structure telle que définie dans la revendication 1.

Selon d'autres caractéristiques de l'invention :
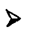 les profilés ont une section en I déterminant deux espaces longitudinaux continus, de part et d'autre de l'âme ;
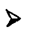 les profilés ont une section en C angulaire, déterminant un espace longitudinal continu unique, latéral à l'âme ;
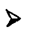 l'espace longitudinal continu situé à l'extérieur des bordures est fermé sur au moins une partie de sa longueur par une ou plusieurs panneaux fixés à l'une au moins des ailes ;
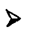 la partie centrale est fixe, l'ensemble constituant une plate-forme susceptibles d'être empruntée par des personnes à des fins de déplacement ou d'opérations sur place ;
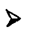 une rambarde, au moins, comprenant des montants et une main-courante est disposée latéralement à la structure, les montants étant fixés au profilé longitudinal correspondant ;
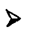 la partie centrale est constituée par le brin supérieur d'une bande transporteuse engagée sur des cylindres et qui s'étend au-dessus des traverses ;
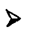 la bande transporteuse a un brin inférieur qui s'étend au-dessous des traverses et repose sur des cylindres montés librement rotatifs ;
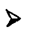 la bande transporteuse est engagée d'une part sur un cylindre de mise en mouvement situé à une extrémité de la structure et contenant un moteur, ce cylindre constituant ainsi un tambour moteur, et d'autre part sur un cylindre de renvoi situé à l'extrémité de la structure opposée à la précédente, un cylindre dit « de tension » à position ajustable étant avantageusement prévu près du tambour moteur en vue d'assurer la tension de la bande transporteuse ;
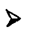 des plaques fixes et lisses réunissent les deux bordures et sont interposées entre la face inférieure du brin supérieur de la bande transporteuse et les ailes supérieures des deux bordures, auxquelles lesdites plaques sont fixées par des organes amovibles ;
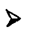 des rives longitudinales sont assujetties aux deux bordures de manière amovible et présentent une face utile plane et lisse qui s'étend dans un plan perpendiculaire à celui de la bande transporteuse, les deux faces utiles se faisant face de part et d'autre de ladite bande transporteuse ;
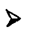 les rives présentent un retour inférieur perpendiculaire à leur face utile et par lequel elles sont assujetties aux bordures ;
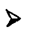 les plaques sont appliquées directement sur les ailes supérieures des deux bordures et les retours des rives sont posés sur les plaques, des organes de fixation amovibles réunissant les retours des rives, les plaques et les ailes des bordures ;
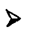 les rives sont constituées par des caissons en tôle pliée pour présenter outre une grande face utile et un retour, deux petites faces d'extrémité perpendiculaires à la grande face utile et une petite face parallèle et opposée au retour, des entretoises de raidissage étant éventuellement disposées entre le retour et la petite face opposée à lui;
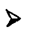 des panneaux d'habillage amovibles sont placés extérieurement aux bordures et constituent à la fois les panneaux de fermeture de l'espace longitudinal continu situé à l'extérieur des bordures, et des panneaux de fermeture des rives, panneaux d'habillage qui équivalent pour celles-ci à une grande face parallèle à la grande face utile, ces panneaux d'habillage étant munis d'un retour destiné à être fixé par des organes amovibles sous l'aile inférieure des profilés ;
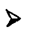 la structure comporte un ensemble de motorisation amovible composé d'un cadre fixe formé de deux profilés de petite longueur mais identiques aux profilés des bordures et identiquement disposés, ce cadre fixe portant le tambour moteur, le cylindre de tension et un cylindre de renvoi ainsi que leurs accessoires nécessaires au fonctionnement tels qu'alimentation électrique, organes de montage et de réglage, boîtier de connexion et autre, cadre qui est recouvert d'une plaque supérieure analogue à celles de la partie centrale et devant se trouver dans le même plan, et protégé par un capot de protection inférieur monté pivotant sous le cadre, selon un axe horizontal transversal afin de pouvoir occuper une position de fermeture dans laquelle il est en position haute substantiellement horizontale et une position d'ouverture dans laquelle il est substantiellement vertical, cet ensemble pouvant être monté et démonté à l'extrémité d'un ensemble autonome et autoporteur ;
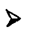 un ensemble autonome et autoporteur au moins est placé en hauteur, sur des supports verticaux constitués par des profilés métalliques ;
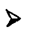 les supports verticaux ont une hauteur telle que la circulation est possible sous l'ensemble ou les ensembles ainsi surélevés, soit pour des personnes seulement, soit pour des personnes et des engins, véhicules et appareils de manutention ;
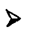 certains au moins des cylindres situés sous le brin inférieur de la bande transporteuse sont masqués par des caches ;

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique éclatée d'une structure conforme à l'invention, appliquée à la réalisation d'un transporteur à bande.

La figure 2 est une vue schématique partielle en perspective de la structure de la figure 1.

La figure 3 est une vue schématique partielle en coupe transversale d'un profilé à section en I utilisable pour la réalisation d'une structure conforme à l'invention, illustrant l'utilisation de ce profilé et d'une traverse pour le passage de câbles.

La figure 4 est une vue schématique analogue à celle de la figure 3 montrant un profilé à section en C angulaire, à savoir en « [ » et non plus à section en I.

La figure 5 est une vue schématique partielle en coupe transversale illustrant la mise en place d'un panneau d'habillage à l'extérieur des bordures de la structure.

La figure 6 est une vue schématique partielle en coupe longitudinale d'un ensemble de motorisation conforme à l'invention.

La figure 7 est une vue schématique partielle en perspective d'une structure conforme à l'invention, appliquée à la réalisation d'une plate-forme.

La figure 8 est une vue schématique partielle en plan d'une installation de tri et de manutention réalisée avec des structures conformes à l'invention.

La figure 9 est une vue schématique en élévation de l'installation de la figure 8.

En se reportant au dessin, on voit qu'une structure conforme à l'invention comprend deux bordures longitudinales 1 et 2 situées de part et d'autre d'une partie centrale 3.

Les bordures 1 et 2 sont symétriques et ce que l'on va décrire pour l'une est aussi valable pour l'autre.

La structure comprend essentiellement un châssis de base et des éléments complémentaires qui peuvent être différents selon les applications.

Le châssis de base est formé par deux profilés 4 et 5 réunis par des traverses 6 soudées ou boulonnées afin de former un ensemble robuste et rigide. A cet égard, il faut souligner que les profilés 4 et 5 sont des produits du commerce dont on choisit la section (formes et dimensions), pour que la résistance de l'ensemble et sa rigidité réponde aux exigences de l'application envisagée, notamment en fonction de la longueur de l'élément fini et de la portée devant exister entre deux supports verticaux sur lesquels l'élément doit reposer, ainsi que cela sera décrit et explicité plus loin.

Il peut s'agir de profilés obtenus à chaud ou à froid, selon une technologie bien connue et qui n'a pas à être décrite ici. Il est intéressant que la section des profilés présente un espace longitudinal accessible depuis l'extérieur, pour des raisons expliquées plus loin.

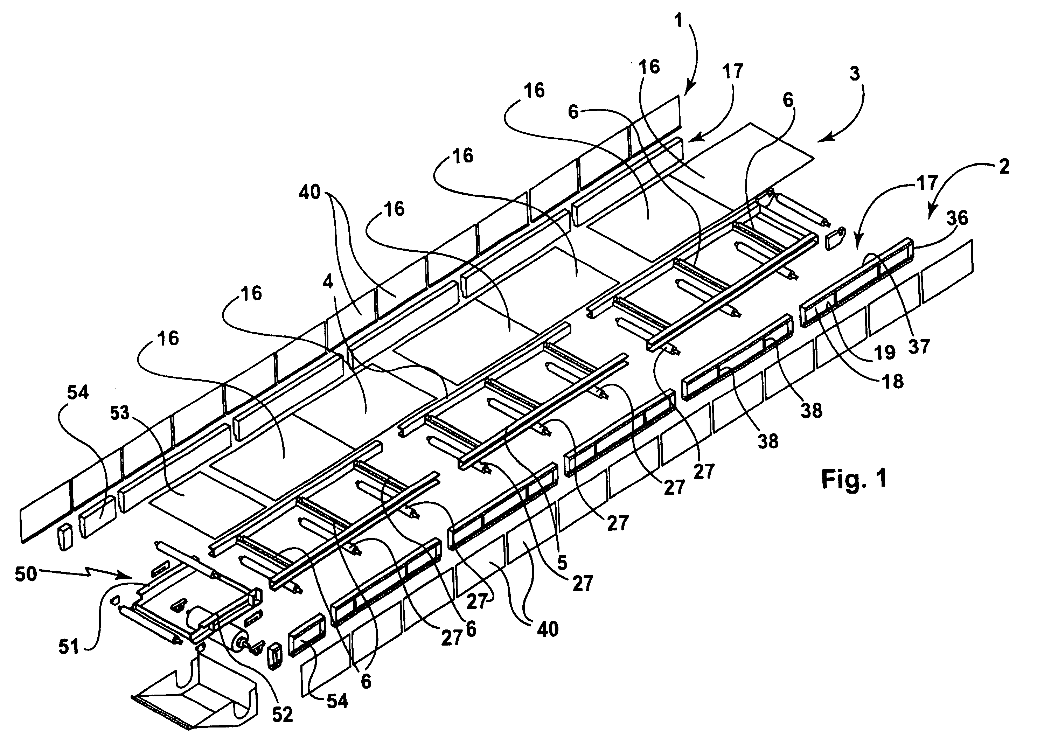

C'est pourquoi les deux sections standards les mieux adaptées sont la section en I et la section en C angulaire, c'est-à-dire « [ ». Sur les figures 1, 2 et 4, on a représenté une section en « [ » présentant une âme verticale 7, une aile supérieure 8 et une aile inférieure 9, qui déterminent un espace longitudinal continu 10. Les profilés 4 et 5 sont disposés dos à dos, c'est-à-dire que les deux espaces 10 sont situés à l'extérieur et donc facilement accessibles.

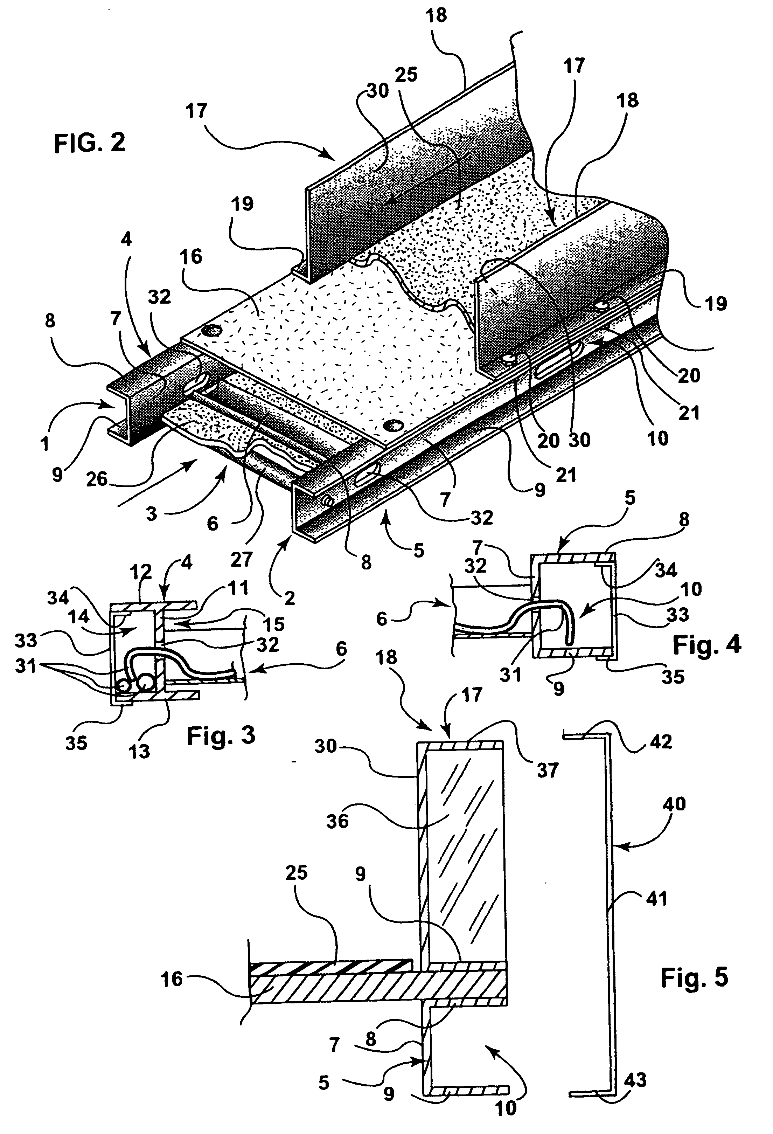

Sur la figure 3, on a représenté une section en I présentant une âme centrale 11, une aile supérieure 12 et une aile inférieure 13, déterminant deux espaces longitudinaux continus opposés 14 et 15.

Les profilés 4 et 5 peuvent être de longueur variable selon les applications et peuvent être coupés dans des profilés du commerce de longueur standard. Etant donné leur robustesse et leur rigidité, il est possible de réaliser des ensembles de grande longueur.

Ils sont en outre réunis en atelier au moyen des traverses 6, puis le châssis ainsi réalisé est équipé, toujours en atelier, de sa partie centrale et des compléments.

Sur les figures 1 et 2, l'invention est appliquée à un transporteur à bande dont la structure complète est la suivante :

La partie centrale 3 comprend des plaques 16 qui sont rigides mais lisses et qui sont appliquées directement sur les ailes supérieures 8 des profilés 4 et 5. Sur les plaques 16, se trouvent des rives 17 présentant une partie verticale 18 et un retour inférieur horizontal 19. Le retour 19 est destiné à la fixation des rives 17, à l'aplomb des ailes 8 des deux profilés 4 et 5.

Les retours 19 des rives 17, les plaques 16 et les profilés 4 et 5 sont fixés ensemble, par exemple au moyen de boulons 20 traversant des trous alignés et immobilisés par des écrous 21 situés sous les ailes supérieures 8.

Une bande transporteuse est engagée sur des cylindres, son brin supérieur 25 s'étendant sur les plaques 16, entre les rives 17 des bordures 1 et 2, tandis que son brin inférieur 26 s'étend sous les plaques 16, entre les âmes 7 des profilés 4 et 5.

Le brin inférieur 26 passe d'une part sur des cylindres de soutien 27 montés librement rotatifs et tourillonnant dans des paliers à roulement disposés dans les âmes 7 des profilés 4 et 5, et d'autre part sous les traverses fixes 6.

Les deux faces 30 des parties 18 qui sont situées en regard l'une de l'autre, de part et d'autre de la partie centrale 3 sont dites faces « utiles » parce qu'elles constituent des guides longitudinaux pour les objets qui se déplacent avec le brin supérieur 25 de la bande transporteuse et dont la hauteur est telle qu'ils peuvent entrer à leur contact et glisser contre elles. En outre, elles empêchent ces objets de se déplacer latéralement et les maintiennent constamment sur le brin 25.

Avec ce mode de réalisation, la partie centrale 3 est formée par les plaques 16 et par la bande transporteuse 25-26.

Sur les figures 3 et 4, on a illustré une caractéristique de l'invention selon laquelle les espaces 10 peuvent être utilisés comme logements pour des câbles électriques 31 nécessaires au fonctionnement complet de l'ensemble, qui est équipé de différents appareils électriques tels que des cellules photoélectriques, des capteurs, des appareils d'éclairage, etc., outre un moteur principal destiné à la mise en fonctionnement de la bande transporteuse.

On voit que l'âme 7-11 des profilés est traversée de passages 32 situés au-dessus des traverses 6 car celles-ci étant creuses, elles ont une section en gouttière et peuvent recevoir un ou plusieurs des câbles 31 passant dans un logement 10, soit pour traverser complètement la partie centrale 3, soit pour être connectés à un appareil électrique tel qu'un palpeur situé au-dessus du brin 25.

Ces figures 3 et 4 montrent aussi que l'on peut fermer les passages 10-15 sur toute leur longueur ou sur une partie seulement, au moyen de panneaux 33, notamment pour protéger les câbles 31 qui s'y trouvent. La fixation des panneaux 33 peut être obtenue par tout moyen à la portée de l'Homme de Métier et que l'on n'a pas représentés.

Les panneaux 33 ont ici deux retours respectivement supérieur 34 et inférieur 35 qui sont placés sous les ailes 8-12 et 9-13. Le retour 34 ne doit pas être placé sur l'aile 8 car celle-ci doit recevoir les plaques 16. Quant au retour 35, il peut être fixé à l'aile 9 au moyen de vis (non représentées) engagées par-dessous.

Sur la figure 5, on voit un mode de réalisation de l'invention selon lequel les rives 17 sont formées en caisson par pliage de tôle afin de constituer non seulement la partie verticale 18 et le retour 19 mais également deux petites faces d'extrémité 36 (une seule est visible sur la figure 5) et une petite face 37 opposée au retour 19.

Des entretoises de raidissage 38 réunissent le retour 19 et la petite face opposée 37.

Sur la figure 5, on voit une variante de réalisation de l'invention selon laquelle on ferme à la fois l'espace 10 et les rives en caisson au moyen de panneaux d'habillage 40 comprenant une grande face 41 et deux petites faces horizontales 42 et 43.

La hauteur de la grande face 41 permet au panneau d'habillage 40 de fermer l'espace 10 et le caisson formant la rive 17, en recouvrant le profilé 5 et l'épaisseur de la plaque 16.

On obtient ainsi une très bonne finition de la bordure équipée.

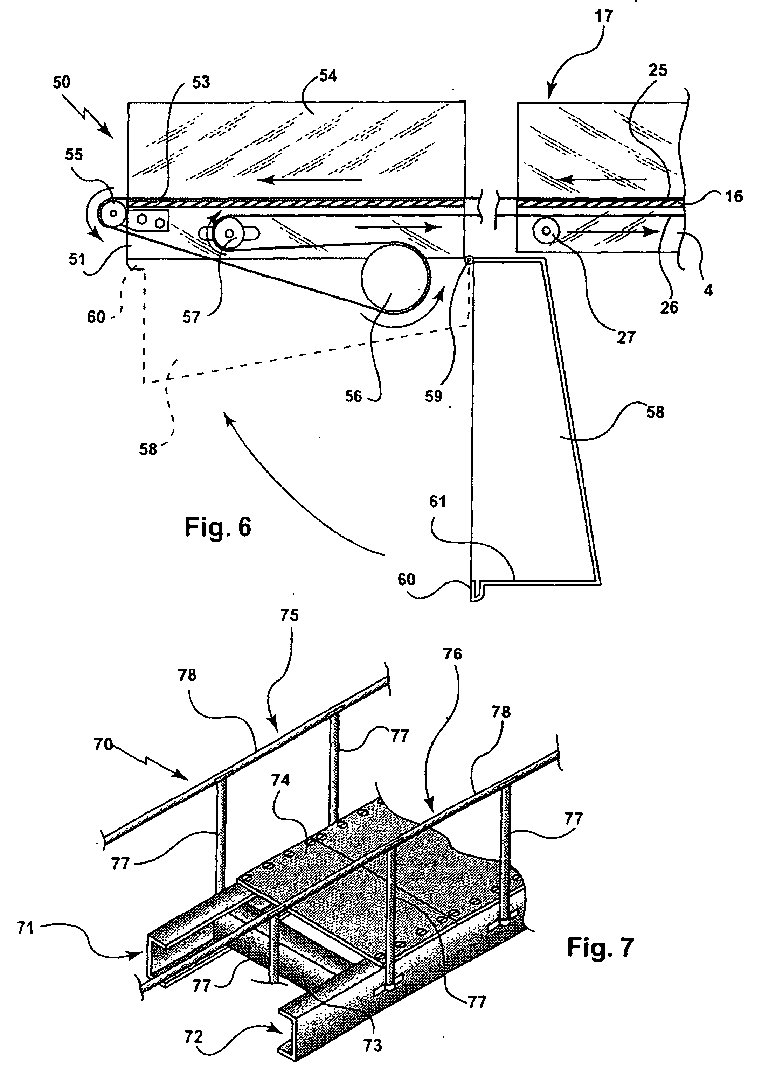

En se reportant maintenant à la figure 6, on voit un ensemble de motorisation 50 qui se place à l'extrémité de l'élément que l'on vient de décrire.

Pour cela, il a la même structure, à savoir deux profilés 51 et 52 identiques aux profilés 4 et 5 mais beaucoup plus courts, une plaque 53 identique aux plaques 16, de même largeur mais moins longue et deux rives opposées 54 (une seule est visible sur la figure 6).

Le brin supérieur 25 passe sur un cylindre de renvoi 55 situé à l'extrémité de l'ensemble 50 et monté librement rotatif, puis sur un cylindre creux 56 de plus gros diamètre et contenant un moteur d'entraînement (non représenté). Ce cylindre 56 ainsi équipé est un tambour moteur qui, lorsqu'il est en marche, entraîne la bande transporteuse, considérant qu'à cet endroit, le brin supérieur 25 et le brin inférieur 26 se confondent. Au-delà du tambour moteur 56, la bande transporteuse passe sur un cylindre de tension 57 monté librement rotatif mais dont la position est ajustable par des moyens bien connus de l'Homme de Métier, et devient le brin inférieur 26 qui passe sur les cylindres de soutien 27 de l'ensemble, dont un est visible sur la figure 6.

L'ensemble de motorisation 50 est en tous points identique à l'ensemble complet, pour ce qui est de sa partie supérieure : profilés 51-52, plaque 53, rives 54, brin supérieur 25.

En revanche, ses organes mécaniques et électriques sont tout localisés au-dessous du niveau du brin 25 et il est bon de les protéger au moyen d'un capot inférieur 58 monté pivotant selon une articulation horizontale 59 et muni d'organes de fermeture schématisés par un simple retour de tôle 60.

La position de fermeture de ce capot est représentée en pointillés alors que sa position d'ouverture est représentée en traits plein, afin de montrer une caractéristique intéressante selon laquelle le capot 58 présente une partie plane 61 qui est horizontale lorsque le capot 58 est ouvert et qui peut être utilisée pour poser commodément des outils ou des pièces détachées lorsque l'on procède à l'entretien et à la réparation des organes mécaniques et/ou électriques, étant supposé que l'ensemble 50 est situé suffisamment en hauteur pour que le capot 58 puisse être ouvert, et donc en position abaissée, et que l'opérateur peut se placer sans difficultés sous l'ensemble 50.

Etant donné que les câbles 31 courent dans les espaces 10 et le cas échéant dans les traverses 6, il est facile de regrouper le maximum d'éléments électriques dans l'ensemble de motorisation 50 où ils sont facilement accessibles, ce qui évite des déplacements pénibles et parfois nombreux pour des recherches de pannes d'appareils dispersés.

La figure 7 illustre la possibilité que l'invention possède de réaliser des structures autres que des transporteurs.

L'exemple choisi est celui d'une plate-forme, ou passerelle, 70 qui comporte un châssis identique à celui décrit ci-dessus, à savoir deux profilés 71 et 72 réunis par des traverses 73 et des plaques 74.

S'agissant d'un ensemble inerte, c'est-à-dire non équipé de moteurs ou d'appareils électriques, les espaces 10 des profilés ne sont pas utiles et l'on observe sur la figure 7 que les profilés 71 et 72 sont face à face et non plus dos à dos. Les traverses 73 ne sont plus nécessairement creuses et leur section est indifférente. Ici, on a représenté des traverses 73 à section carrée, ce qui pourrait correspondre à des profilés tubulaires de type courant.

La plate-forme 70 possède deux rambardes latérales 75 et 76 formées de montants 77 fixés extérieurement aux profilés 71 et 72, et d'une main-courante 78.

La robustesse et la rigidité déjà décrites des profilés, permet à une telle plate-forme de reposer sur des montants verticaux avec une grande portée.

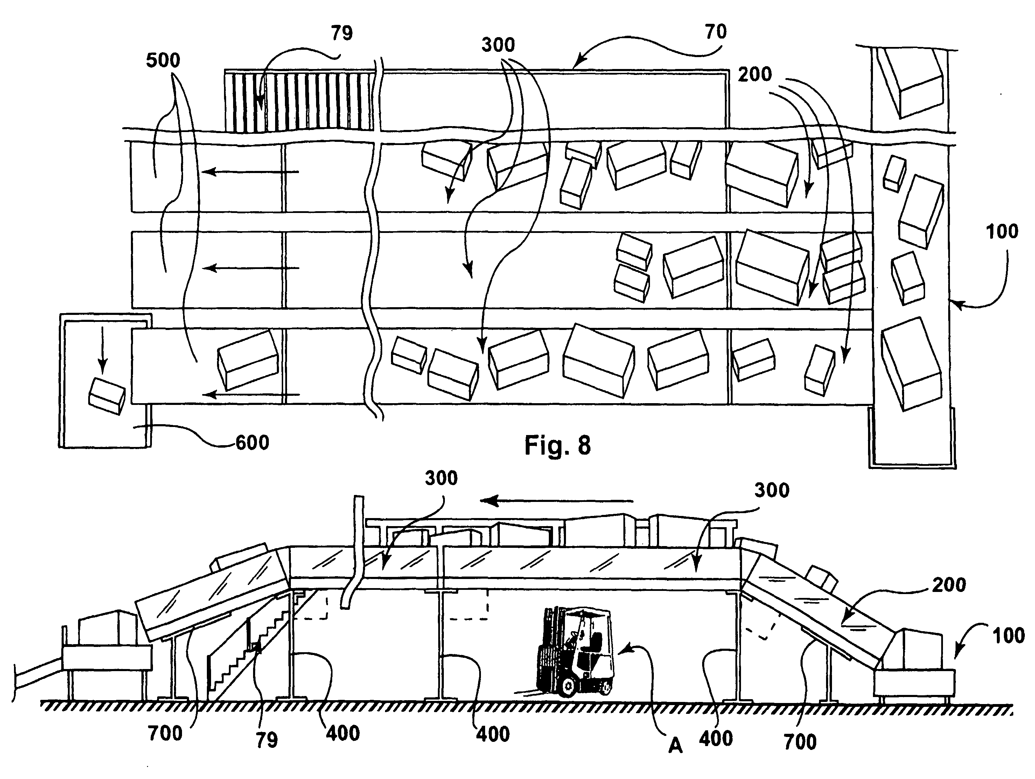

Sur les figures 8 et 9, on a représenté un exemple d'installation utilisant des ensembles autonomes et autoporteurs conformes à l'invention, notamment dans un centre de tri de colis, et l'on voit que l'on peut placer bout à bout et côte à côte plusieurs ensembles conformes à l'invention.

Avec cet exemple, un transporteur 100 est horizontal et placé près du sol et, perpendiculairement à lui, se trouvent des transporteurs inclinés 200 disposés perpendiculairement, ce qui permet de sélectionner les colis arrivant sur le transporteur 100 pour les diriger sélectivement sur les transporteurs inclinés, par exemple en fonction des destinations.

Des transporteurs horizontaux 300 sont disposés en hauteur sur des supports 400 afin de dégager un maximum de surface au sol qui peut être utilisée pour diverses fonctions telles que le stockage ou le remisage d'engins, d'appareils de manutention, etc.

La solidité et la rigidité des ensembles 200 et 300 permet de leur donner une grande longueur et, donc, une portée considérable, de sorte qu'il y a peu de supports verticaux 400, et que la surface dégagée est en outre d'accès et d'usage faciles.

La hauteur des supports verticaux 400 peut être assez importante pour permettre non seulement le passage des personnes mais aussi celui d'engins et appareils divers, ce que l'on a illustré avec un chariot élévateur A.

On distingue dans le haut de la figure 8, une passerelle 70 associée à un escalier 79 et disposée parallèlement aux transporteurs 300, ce qui permet au personnel d'exercer une surveillance sur l'ensemble de ces transporteurs placés côte à côte et au même niveau, ou bien de procéder à des opérations d'entretien, de maintenance ou de réparation.

A leur extrémité aval, les transporteurs 300 joignent des transporteurs inclinés 500 qui aboutissent à des postes de traitement et de tri, avec ou sans transporteur de sortie, dont on n'a représenté qu'un seul 600.

Bien entendu, les transporteurs inclinés ne laissent pas de liberté de passage, à partir d'une certaine hauteur et il faut éviter que des personnes puissent être blessées par les cylindres de soutien 27 qui sont accessibles par le dessous de l'ensemble et, à cette fin, il est bon de disposer des caches 700 sous les transporteurs inclinés, dans leur partie moins haute que la taille d'une personne.

Il ressort de la description ci-dessus que l'invention a des applications très diverses et qu'elle procure de très grands avantages, du fait que chaque ensemble peut être monté et câblé en usine avant d'être livré comme un article manufacturé, et que sa conception simplifie grandement son implantation, au sol ou en hauteur, avec des portées inaccessibles par les moyens connus.

L'absence complète de tôle pliée pour constituer le châssis contribue à la robustesse de l'ensemble et permet d'éliminer les bruits et vibrations que possèdent les transporteurs de type connu.

## Revendications

1. Structure de transporteur à bande, du type comportant deux bordures (1, 2) indépendantes l'une de l'autre, formées chacune par un profilé métallique rigide (4, 5), présentant une âme (7, 11) et deux ailes parallèles de faible largeur respectivement inférieure (9, 13) et supérieure (8, 12) qui déterminent ensemble au moins un espace longitudinal continu (10, 14, 15), lesdites bordures étant réunies par des traverses (6) au-dessus desquelles se trouve une partie centrale (3) et par des plaques fixes (16), au moins un espace longitudinal continu (10, 14) étant situé à l'extérieur des bordures (1, 2), et **caractérisé en ce que** certaines au moins des traverses (6) sont constituées par un profilé à section en gouttière coopérant avec des passages (32) traversant l'âme (7, 11) des profilés.

2. Structure selon la revendication 1, **caractérisée en ce que** les profilés ont une section en I déterminant deux espaces longitudinaux continus (14 et 15), de part et d'autre de l'âme (11).

3. Structure selon la revendication 1, **caractérisée en ce que** les profilés ont une section en C angulaire, déterminant un espace longitudinal continu (10) unique, latéral à l'âme (7).

4. Structure selon l'une quelconque des revendications 2 et 3, **caractérisée en ce que** l'espace longitudinal continu (10) situé à l'extérieur des bordures (1 et 2) est fermé sur au moins une partie de sa longueur par une ou plusieurs panneaux (33) fixés à l'une au moins des ailes (9-13).

5. Structure selon la revendication 1, **caractérisée en ce que** la partie centrale est constituée par le brin supérieur (25) d'une bande transporteuse engagée sur des cylindres (27, 55, 56, 57) et qui s'étend au-dessus des traverses (6).

6. Structure selon la revendication 5, **caractérisée en ce que** la bande transporteuse a un brin inférieur (26) qui s'étend au-dessous des traverses (6) et repose sur des cylindres (27) montés librement rotatifs.

7. Structure selon la revendication 5, **caractérisée en ce que** la bande transporteuse est engagée d'une part sur un cylindre de mise en mouvement (56) situé à une extrémité de la structure et contenant un moteur, ce cylindre (56) constituant ainsi un tambour moteur, et d'autre part sur un cylindre de renvoi situé à l'extrémité de la structure opposée à la précédente, un cylindre (57) dit « de tension » à position ajustable étant prévu près du tambour moteur (56) en vue d'assurer la tension de la bande transporteuse (25-26).

8. Structure selon la revendication 5, **caractérisée en ce que** les plaques fixes et lisses (16) réunissent les deux bordures (1 et 2) et sont interposées entre la face inférieure du brin supérieur (25) de la bande transporteuse et les ailes supérieures (8) des deux bordures, auxquelles lesdites plaques (16) sont fixées par des organes amovibles.

9. Structure selon la revendication 5, **caractérisée en ce que** des rives longitudinales (17) sont assujetties aux deux bordures (1 et 2) de manière amovible et présentent une face utile (30) plane et lisse qui s'étend dans un plan perpendiculaire à celui de la bande transporteuse (25-26), les deux faces utiles (30) se faisant face de part et d'autre de ladite bande transporteuse (25-26).

10. Structure selon la revendication 9, **caractérisée en ce que** les rives (17) présentent un retour inférieur (19) perpendiculaire à leur face utile (30) et par lequel elles sont assujetties aux bordures.

11. Structure selon la revendication 10, **caractérisée en ce que** les plaques (16) sont appliquées directement sur les ailes supérieures (8) des deux bordures et les retours (19) des rives (17) sont posés sur les plaques (16), des organes de fixation amovibles (20 et 21) réunissant les retours (19) des rives (17), les plaques (16) et les ailes (8) des bordures.

12. Structure selon la revendication 10, **caractérisée en ce que** les rives (17) sont constituées par des caissons en tôle pliée pour présenter outre une grande face utile (30) et un retour (19), deux petites faces d'extrémité (36) perpendiculaires à la grande face utile (30) et une petite face (37) parallèle et opposée au retour (19), des entretoises de raidissage (38) étant éventuellement disposées entre le retour (19) et la petite face (37) opposée à lui.

13. Structure selon la revendication 12, **caractérisée en ce que** des panneaux d'habillage amovibles (40) sont placés extérieurement aux bordures et constituent à la fois les panneaux de fermeture de l'espace longitudinal continu (10) situé à l'extérieur des bordures, et des panneaux de fermeture des rives (17), panneaux d'habillage (40) qui équivalent pour celles-ci à une grande face parallèle à la grande face utile (30), ces panneaux d'habillage (40) étant munis d'un retour (43) destiné à être fixé par des organes amovibles sous l'aile inférieure (9) des profilés (4 et 5).

14. Structure selon la revendication 7, **caractérisée en ce qu****'**elle comporte un ensemble de motorisation amovible (50) composé d'un cadre fixe formé de deux profilés de petite longueur (51 et 52) mais identiques aux profilés (4 et 5) des bordures et identiquement disposés, ce cadre fixe portant le tambour moteur (56), le cylindre de tension (57) et un cylindre de renvoi (55) ainsi que leurs accessoires nécessaires au fonctionnement tels qu'alimentation électrique, organes de montage et de réglage, boîtier de connexion et autre, cadre qui est recouvert d'une plaque supérieure (53) analogue à celles (16) de la partie centrale (3) et devant se trouver dans le même plan, et protégé par un capot de protection inférieur (58) monté pivotant sous le cadre, selon un axe horizontal transversal (59) afin de pouvoir occuper une position de fermeture dans laquelle il est en position haute substantiellement horizontale et une position d'ouverture dans laquelle il est substantiellement vertical, cet ensemble pouvant être monté et démonté à l'extrémité d'un ensemble autonome et autoporteur.

15. Structure selon la revendication 1, **caractérisée en ce qu****'**un ensemble autonome et autoporteur (300) au moins est placé en hauteur, sur des supports verticaux (400) constitués par des profilés métalliques.

16. Structure selon la revendication 15, **caractérisée en ce que** les supports verticaux (400) ont une hauteur telle que la circulation est possible sous l'ensemble ou les ensembles (300) ainsi surélevés, soit pour des personnes seulement, soit pour des personnes et des engins, véhicules et appareils de manutention (A).

17. Structure selon la revendication 15, **caractérisé en ce que** certains au moins des cylindres (27) situés sous le brin inférieur (26) de la bande transporteuse sont masqués par des caches (700).

## Patentansprüche

1. Förderbandstruktur, umfassend zwei voneinander unabhängige Rahmenleisten (1, 2), die jeweils aus einem steifen Metallprofil (4, 5) gebildet sind und jeweils einen Steg (7, 11) sowie einen unteren (9, 13) und einen oberen (8, 12) Flügel, die parallel zueinander und von geringer Breite sind, aufweisen, welche gemeinsam zumindest einen durchgehenden, sich in Längsrichtung erstreckenden Hohlraum (10, 14, 15) definieren, wobei die Rahmenleisten durch Querleisten (6), oberhalb derer sich ein Mittelteil (3) befindet, und durch feststehende Platten (16) miteinander verbunden sind, und zumindest ein sich in Längsrichtung erstreckender Hohlraum (10, 14) außerhalb der Rahmenleisten (1, 2) angeordnet ist, **dadurch gekennzeichnet, dass** zumindest einige der Querleisten (6) aus einem Profil mit rinnenförmigem Querschnitt bestehen, das mit Durchlässen (32), die den Steg (7, 11) der Profile durchdringen, zusammenwirkt.

2. Struktur nach Anspruch 1, **dadurch gekennzeichnet, dass** die Profile einen I-förmigen Querschnitt aufweisen, der zwei durchgehende, sich in Längsrichtung erstreckende Hohlräume (14 und 15) zu beiden Seiten des Stegs (11) definiert.

3. Struktur nach Anspruch 1, **dadurch gekennzeichnet, dass** die Profile einen gewinkelten C-förmigen Querschnitt aufweisen, der einen einzigen durchgehenden, sich in Längsrichtung erstreckenden Hohlraum (10) seitlich zum Steg (7) definiert.

4. Struktur nach einem der Ansprüche 2 oder 3, **dadurch gekennzeichnet, dass** der außerhalb der Rahmenträger (1 und 2) angeordnete durchgehende, sich in Längsrichtung erstreckende Hohlraum (10) zumindest an einem Teil entlang seiner Länge durch eine oder mehrere Tafeln (33), die zumindest an einem der Flügel (9-13) angebracht sind, geschlossen ist.

5. Struktur nach Anspruch 1, **dadurch gekennzeichnet, dass** der Mittelteil durch den Obergurt (25) eines Förderbands, das auf Walzen (27, 55, 56, 57) in Eingriff ist und sich oberhalb der Querleisten (6) erstreckt, gebildet ist.

6. Struktur nach Anspruch 5, **dadurch gekennzeichnet, dass** das Förderband über einen Untergurt (26) verfügt, der sich unterhalb der Querleisten (6) erstreckt und auf Walzen (27) aufliegt, die frei drehbar montiert sind.

7. Struktur nach Anspruch 5, **dadurch gekennzeichnet, dass** das Förderband einerseits auf einer Antriebswalze (56), die an einem Ende der Struktur angeordnet ist und einen Motor umfasst, wobei diese Walze (56) somit einen Trommelantrieb bildet, und andererseits auf einer Umlenkwalze in Eingriff ist, die an dem gegenüberliegenden Ende der Struktur angeordnet ist, wobei eine so genannte "Spann"-Walze (57), deren Position verstellbar ist, in der Nähe des Trommelantriebs (56) vorgesehen ist, um die Spannung des Förderbands (25-26) zu gewährleisten.

8. Struktur nach Anspruch 5, **dadurch gekennzeichnet, dass** die feststehenden und glatten Platten (16), die die beiden Rahmenleisten (1 und 2) verbinden, zwischen der unteren Fläche des Obergurts (25) des Förderbands und den oberen Flügeln (8) der beiden Rahmenleisten, an denen die Platten (16) mithilfe von abnehmbaren Mitteln befestigt sind, eingeschoben sind.

9. Struktur nach Anspruch 5, **dadurch gekennzeichnet, dass** längsgerichtete Randbanden (17) auf abnehmbare Weise fest an den beiden Rahmenleisten (1 und 2) angebracht sind und eine flache und glatte Nutzfläche (30) aufweisen, die in einer senkrecht zu jener des Förderbands (25-26) stehenden Ebene verläuft, wobei die beiden Flächen (30) an beiden Seiten des Förderbands (25-26) einander gegenüberliegen.

10. Struktur nach Anspruch 9, **dadurch gekennzeichnet, dass** die Randbanden (17) eine untere Rückfaltung (19) aufweisen, die senkrecht zu ihrer Nutzfläche (30) steht und mithilfe derer sie an den Rahmenleisten fest angebracht sind.

11. Struktur nach Anspruch 10, **dadurch gekennzeichnet, dass** die Platten (16) direkt auf den oberen Flügeln (8) der beiden Rahmenleisten angebracht sind und die Rückfaltungen (19) der Randbanden (17) auf den Platten (16) angeordnet sind, wobei abnehmbare Befestigungsmittel (20 und 21) die Rückfaltungen (19) der Randbanden (17), die Platten (16) und die Flügel (8) der Rahmenleisten verbinden.

12. Struktur nach Anspruch 10, **dadurch gekennzeichnet, dass** die Randbanden (17) aus Faltblechkästen bestehen, um so eine große Nutzfläche (30) und eine Rückfaltung (19), zwei kleine Endflächen (36), die senkrecht zur großen Nutzfläche (30) und eine kleine Fläche (37), die zur Rückfaltung (19) parallel ist und dieser gegenüberliegt, auszubilden, wobei eventuell Versteifungsstreben (38) zwischen der Rückfaltung (19) und der gegenüberliegenden kleinen Fläche (37) angeordnet sind.

13. Struktur nach Anspruch 12, **dadurch gekennzeichnet, dass** abnehmbare Verkleidungstafeln (40) außerhalb der Rahmenleisten angeordnet sind und gleichzeitig die Verschlusstafeln des durchgehenden, sich ins Längsrichtung erstreckenden Hohlraums (10), der außerhalb der Rahmenleisten angeordnet ist, und die Verschlusstafeln der Randbanden (17) bilden, wobei für Letztere die Verkleidungstafeln (40) einer zur großen Nutzfläche (30) parallel stehenden großen Fläche entsprechen und die Verkleidungstafeln (40) eine Rückfaltung (43) aufweisen, die der Befestigung unter dem unteren Flügel (9) der Profile (4 und 5) durch abnehmbare Mittel dienen.

14. Struktur nach Anspruch 7, **dadurch gekennzeichnet, dass** diese eine abnehmbare Motorisierungseinheit (50) umfasst, welche aus einem festen, durch zwei Profile von geringer Länge (51 und 52), die mit den Profilen (4 und 5) der Rahmenleisten identisch sind und identisch angeordnet sind, gebildeten Rahmen besteht, wobei der feste Rahmen den Trommelantrieb (56), die Spannwalze (57) und eine Umlenkwalze (55) sowie die für den Betrieb dieser notwendigen Zubehörteile, wie etwa die Stromversorgung, Befestigungs- und Steuerungsmittel, einen Anschlusskasten und dergleichen, trägt und wobei der Rahmen von einer oberen Platte (53), die analog zu jenen (16) des Mittelteils (3) ist und sich auf gleicher Ebene wie diese befinden muss, abgedeckt und durch eine untere Schutzhaube (58) geschützt ist, welche unter dem Rahmen um eine horizontale, transversale Achse (59) schwenkbar ist, um eine geschlossene Position, in der sie sich in einer im Wesentlichen horizontalen hohen Position befindet, und eine offene Position, in der sie sich in einer im Wesentlichen vertikalen Position befindet, einzunehmen, wobei diese Einheit an einem Ende einer selbständigen und selbsttragenden Einheit angebracht und von diesem abgenommen werden kann.

15. Struktur nach Anspruch 1, **dadurch gekennzeichnet, dass** zumindest eine selbstständige und selbsttragende Einheit (300) oben auf vertikalen Trägern (400), die durch die Metallprofile gebildet sind, angeordnet ist.

16. Struktur nach Anspruch 15, **dadurch gekennzeichnet, dass** die vertikalen Träger (400) eine solche Höhe aufweisen, dass unter der/den so angehobenen Einheit(en) (300) der Verkehr, sei es nur von Personen, sei es von Personen und Maschinen, Fahrzeugen und Geräten zur Instandhaltung (A), möglich ist.

17. Struktur nach Anspruch 15, **dadurch gekennzeichnet, dass** zumindest einige der Walzen (27), die unter dem Untergurt (26) des Förderbands angeordnet sind, durch Abdeckungen (700) verdeckt sind.

## Claims

1. Structure of a belt conveyor, of the type comprising two sides (1, 2) which are independent of each other and each formed by a rigid metallic profile (4, 5), having a web (7, 11) and two parallel legs of a small size, respectively lower (9, 13) and upper (8, 12), which together define at least one continuous longitudinal space (10, 14, 15), said sides being joined by tie-bars (6), above which is situated a central part (3), and by fixed plates (16), at least one continuous longitudinal space (10, 14) being situated externally of the sides (1, 2) and **characterised in that** some at least of the tie-rods (6) are formed by a profile which has a trough section cooperating with passages (32) which traverse the web (7, 11) of the profiles.

2. Structure according to claim 1, **characterised in that** the profiles have an 1-section defining two continuous longitudinal spaces (14 and 15), on both sides of the web (11).

3. Structure according to claim 1, **characterised in that** the profiles have a C-angle section defining a single continuous longitudinal space (10), laterally to the web (11).

4. Structure according to any of the claims 2 and 3, **characterised in that** the continuous longitudinal space (10) which is situated externally of the sides (1 and 2) is closed over at least one part of its length by one or more panels (33) which are mounted on at least one of the legs (9 - 13).

5. Structure according to claim 1, **characterised in that** the central part is formed by the upper strand (25) of a conveyor belt which is engaged on rollers (27, 55, 56, 57) and which extends above the tie-bars (6).

6. Structure according to claim 5, **characterised in that** the conveyor belt has a lower strand (26) which extends below the tie-rods (6) and rests on rollers (27) which are mounted so as to rotate freely.

7. Structure according to claim 5, **characterised in that** the conveyor belt is engaged, on the one hand, on a driving roller (56) which is situated at one end of the structure and contains a motor, this roller (56) thus forming a motorised driving pulley and, on the other hand, on a return roller which is situated at the end of the structure opposite the preceding one, a roller (57) termed "tension" with an adjustable position being provided near the motorised driving pulley (56) with a view to ensuring tensioning of the conveyor belt (25 - 26).

8. Structure according to claim 5, **characterised in that** the fixed, smooth plates (16) join the two sides (1 and 2) and are interposed between the lower face of the upper strand (25) of the conveyor belt and the upper legs (8) of the two sides to which said plates (16) are fixed by removeable elements.

9. Structure according to claim 5, **characterised in that** longitudinal strips (17) are fastened to the two sides (1 and 2) in a removeable manner and have a flat, smooth working face (30) which extends in a plane which is perpendicular to that of the conveyor belt (25 - 26), the two working faces (30) facing both sides of said conveyor belt (25 - 26).

10. Structure according to claim 9, **characterised in that** the strips (17) have a lower return (19) which is perpendicular to their working face (30) and via which they are fastened to the sides.

11. Structure according to claim 10, **characterised in that** the plates (16) abut directly on the upper legs (8) of the two sides and the returns (19) of the strips (17) are placed on the plates (16), removeable mounting elements (20 and 21) joining the returns (19) of the strips (17), the plates (16) and the legs (8) of the sides.

12. Structure according to claim 10, **characterised in that** the strips (17) are formed by bent sheet metal boxes in order to present, in addition, a large working face (30) and a return (19), two small end faces (36) which are perpendicular to the large working face (30), and a small face (37) which is parallel to and opposite the return (19), stiffening struts (38) being disposed, if necessary, between the return (19) and the small face (37) which is opposite thereto.

13. Structure according to claim 12, **characterised in that** removeable covering panels (40) are positioned externally to the sides and simultaneously form panels, which close the continuous longitudinal space (10) situated externally of the sides, and panels which close the strips (17), covering panels (40) which are equivalent to those which have a large face parallel to the large working face (30), these covering panels (40) being provided with a return (43) which is intended to be fixed via removeable elements below the lower leg (9) of the profiles (4 and 5).

14. Structure according to claim 7, **characterised in that** it comprises a removeable motorisation assembly (5) comprising a fixed frame formed by two profiles which have a small length (51 and 52) but are identical to the profiles (4 and 5) of the sides and are identically disposed, this fixed frame carrying the motorised driving pulley (56), the tensioning roller (57) and a return roller (55) and their accessories which are operationally required, such as electrical supply, mounting and control elements, connection box etc., said frame being covered by an upper plate (53), analogous to those (16) of the central part (3) and requiring to be situated in the same plane and protected by a lower protection cover (58), which is mounted so as to pivot below the frame according to a transverse, horizontal axis (59), in order to be able to occupy a closed position, in which it is in a high, substantially horizontal position, and a closed position, in which it is substantially vertical, this assembly being able to be assembled and dismantled at the end of an autonomous and self-supporting assembly.

15. Structure according to claim 1, **characterised in that** an autonomous and self-supporting assembly (300) at least is situated in a raised position, on vertical supports (400) formed by metallic profiles.

16. Structure according to claim 15, **characterised in that** the vertical supports (400) have a height such that movement is possible under the assembly or the assemblies (300) which are elevated in such a manner, either purely for persons or for persons and machines, vehicles and handling devices (A).

17. Structure according to claim 15, **characterised in that** some at least of the rollers (27), which are situated under the lower strand (26) of the conveyor belt, are concealed by screens (700).
